# EUROPEAN PATENT APPLICATION

(11) **EP 4 661 203 A1**
(43) Date of publication of application: **10.12.2025**
(21) Application number: 24839998.2
(22) Date of filing: 04.07.2024
(51) Int. Cl.: H01M 50/591, H01M 50/588, H01R 13/527, H01M 50/276, H01M 50/249

(54) **BATTERY PACK AND VEHICLE INCLUDING SAME**

(30) Priority: 12.07.2023 KR 20230090614
(71) Applicant: LG Energy Solution, Ltd., Seoul 07335 (KR)
(72) Inventor: PARK, Jeong-Hoon, Daejeon 34122 (KR)
(74) Representative: Plasseraud IP
(86) International application number: PCT/KR2024/009508
(87) International publication number: WO 2025/014186

(57) **Abstract**

Disclosed is a battery pack, and a vehicle including the same. The battery pack includes a plurality of battery modules in each of which a plurality of battery cells are stacked; a pack case in which the plurality of battery modules are accommodated; and a fireproof cover configured to cover a plurality of bus bars, which electrically connect the plurality of battery modules, to prevent an abnormal phenomenon of the bus bars when a thermal event occurs.

## Description

### TECHNICAL FIELD

This application is based on and claims priority from Korean Patent Application No. 10-2023-0090614, filed on July 12, 2023, with the Korean Intellectual Property Office, the disclosure of which is incorporated herein in its entirety by reference.

The present disclosure relates to a battery pack and a vehicle including the same, and more specifically, to a battery pack capable of preventing an abnormal phenomenon of a bus bar inside the battery pack, and a vehicle including the same.

### BACKGROUND ART

As the technology development and demand for mobile devices increase, demand for secondary batteries as an energy source is rapidly increasing, and nickel cadmium batteries or hydrogen ion batteries have been used as conventional secondary batteries, but recently, lithium secondary batteries that have almost no memory effect compared to nickel-based secondary batteries, thereby having advantages such as free charging and discharging, very low self-discharge rate, and high energy density, are widely used.

These lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

Lithium secondary batteries are composed of a positive electrode, a negative electrode, a separator interposed therebetween and an electrolyte, and are classified into a lithium ion battery (LIB), a polymer lithium-ion battery (PLIB), and the like depending on what positive electrode active material and negative electrode active material are used. Typically, electrodes of these lithium secondary batteries may be formed by coating a positive electrode or negative electrode active material on a current collector, such as an aluminum or copper sheet, a mesh, a film, a foil, or the like, and then drying the same.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

Various types of secondary batteries include a battery module having a case for protecting battery cells, where a plurality of battery cells are stacked and inserted to the case, and a battery pack in which a plurality of battery modules are accommodated.

Here, the battery pack may include a bus bar that electrically connects a plurality of battery modules accommodated inside the battery pack. Here, if a thermal event, such as a fire occurring in at least one of the battery cells inside the battery module, occurs, the bus bar may be distorted by the heat, causing a short circuit or destroying insulation. If such an abnormal phenomenon of the bus bar occurs, the battery module or the battery pack may be damaged, and therefore, it is necessary to prevent such an abnormal phenomenon of the bus bar.

### DISCLOSURE

### Technical Problem

Therefore, the present disclosure is directed to providing a battery pack that may prevent an abnormal phenomenon of a bus bar inside the battery pack when a thermal event occurs, and a vehicle including the same.

### Technical Solution

In one aspect of the present disclosure, there is provided a pack, comprising: a plurality of battery modules in each of which a plurality of battery cells are stacked; a pack case in which the plurality of battery modules are accommodated; and a fireproof cover configured to cover a plurality of bus bars, which electrically connect the plurality of battery modules, to prevent an abnormal phenomenon of the bus bars when a thermal event occurs.

In an embodiment, the pack case may include a lower frame on which the plurality of battery modules are seated; a side frame extending upward from an edge of the lower frame; an inner frame extending upward from an inside of the lower frame and coupled to the side frame; a barrier frame coupled to the inner frame and interposed between the plurality of battery modules; and an upper frame coupled to the side frame, wherein the fireproof cover may be attached to the inner frame and is put on the barrier frame.

In an embodiment, the fireproof cover may include a first cover portion configured to cover a first bus bar that connects a plurality of battery modules arranged at one side of the inner frame based on the inner frame; a second cover portion configured to cover a second bus bar that connects a plurality of battery modules arranged at the other side of the inner frame based on the inner frame; and a connection portion configured to connect the first cover portion and the second cover portion.

In an embodiment, the inner frame may have at least one coupling groove formed thereon, and the connection portion may be coupled to the coupling groove.

In an embodiment, the coupling groove may be formed in a slit shape on upper and side surfaces of the inner frame.

In an embodiment, the coupling groove may be formed in a pair, and the pair of coupling grooves may be formed parallel to each other.

In an embodiment, the first cover portion and the second cover portion may be symmetrical to each other based on the connection portion.

In an embodiment, the first cover portion may be provided to cover the first bus bar at an upper side of the first bus bar, and the second cover portion may be provided to cover the second bus bar from at an upper side of the second bus bar.

In an embodiment, one fireproof cover may be configured to cover four battery modules.

In an embodiment, the four battery modules may be arranged so that the bus bars respectively provided in the battery modules are located adjacent to each other.

In an embodiment, the barrier frame may have a protrusion formed thereon, the fireproof cover may have a groove formed thereon, and the protrusion of the barrier frame may be fitted into the groove of the fireproof cover.

In an embodiment, the fireproof cover may be formed in a shape including an H shape.

In an embodiment, the battery pack may further comprise a blocking cover installed at an upper side of the fireproof cover.

In an embodiment, the blocking cover may be made of mica.

Meanwhile, in another aspect of the present disclosure, there is also provided a vehicle, comprising the battery pack described above.

### Advantageous Effects

The embodiments of the present disclosure have the effect of preventing an abnormal phenomenon of a bus bar inside the battery pack when a thermal event occurs.

Also, the present disclosure has the effect of ensuring the stability of the battery module.

In addition, the present disclosure has the effect of reducing costs by easy assembly and elimination of fastening parts.

### DESCRIPTION OF DRAWINGS

FIG. 1 is a partially exploded perspective view showing a battery pack according to the first embodiment of the present disclosure.
FIG. 2 is a cross-sectional view showing a battery module included in the battery pack of FIG. 1.
FIG. 3 is a partial perspective view showing the battery pack according to the first embodiment of the present disclosure, in which a fireproof cover is coupled to an inner frame.
FIG. 4 is a perspective view showing the fireproof cover in the battery pack according to the first embodiment of the present disclosure.
FIG. 5 is a partial plan view showing the battery pack according to the first embodiment of the present disclosure, in which the fireproof cover is coupled to the inner frame.
FIG. 6 is a partial perspective view showing the battery pack according to the first embodiment of the present disclosure, in which the fireproof cover is separated from the inner frame.
FIG. 7 is a cross-sectional view, taken along line A-A' of FIG. 5.
FIG. 8 is a cross-sectional view, taken along line B-B' of FIG. 5.
FIG. 9 is a partially exploded perspective view showing a battery pack according to the second embodiment of the present disclosure.
FIG. 10 is a drawing for illustrating a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

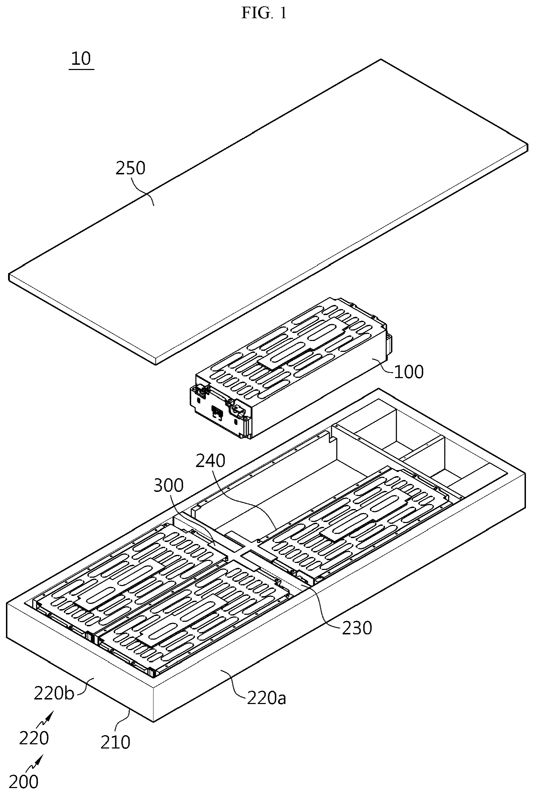

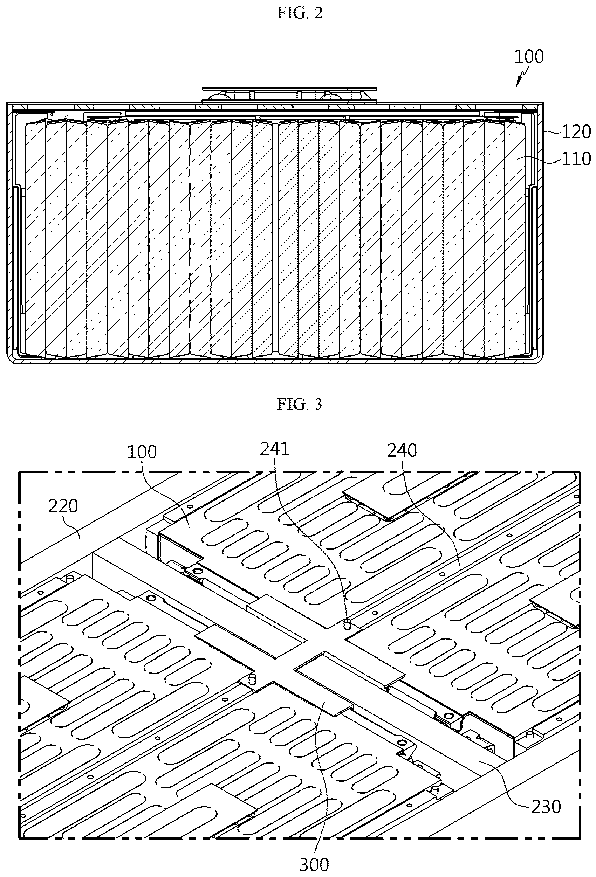

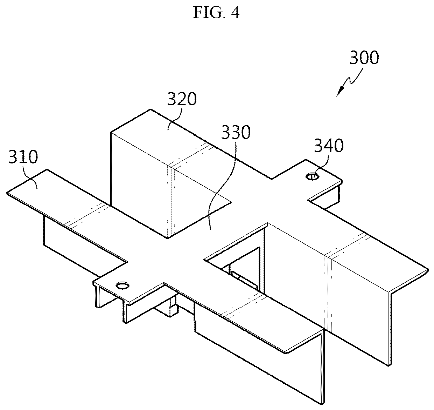

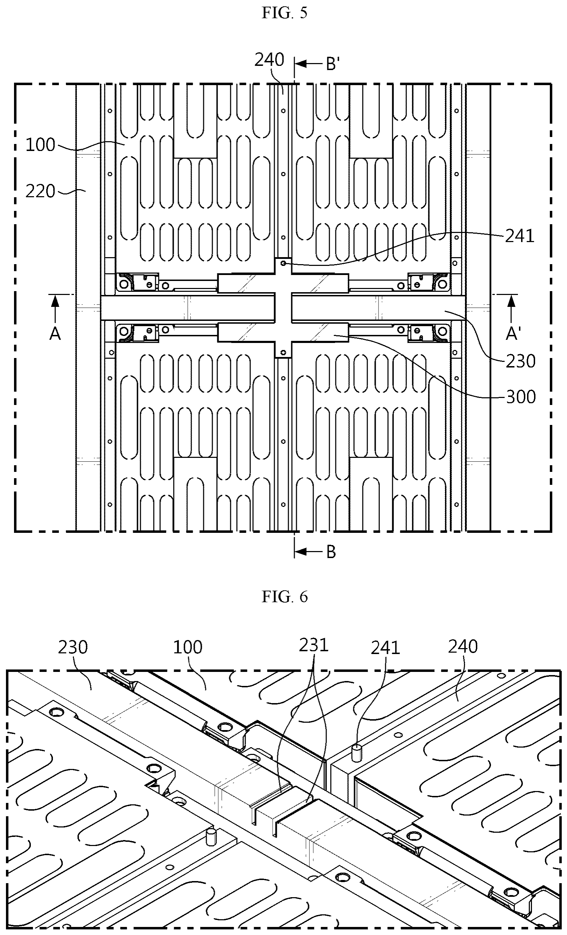

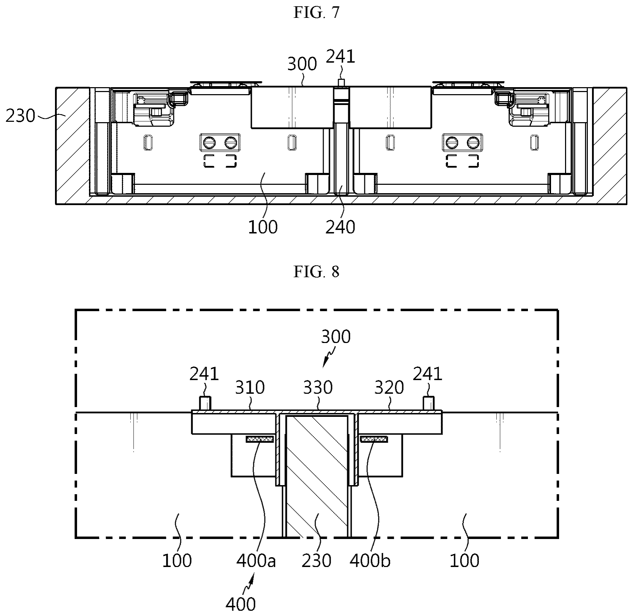

FIG. 1 is a partially exploded perspective view showing a battery pack according to the first embodiment of the present disclosure, FIG. 2 is a cross-sectional view showing a battery module included in the battery pack of FIG. 1, FIG. 3 is a partial perspective view showing the battery pack according to the first embodiment of the present disclosure, in which a fireproof cover is coupled to an inner frame, FIG. 4 is a perspective view showing the fireproof cover in the battery pack according to the first embodiment of the present disclosure, FIG. 5 is a partial plan view showing the battery pack according to the first embodiment of the present disclosure, in which the fireproof cover is coupled to the inner frame, FIG. 6 is a partial perspective view showing the battery pack according to the first embodiment of the present disclosure, in which the fireproof cover is separated from the inner frame, FIG. 7 is a cross-sectional view, taken along line A-A' of FIG. 5, and FIG. 8 is a cross-sectional view, taken along line B-B' of FIG. 5.

Referring to FIG. 1, the battery pack 10 according to the first embodiment of the present disclosure may include a plurality of battery modules 100, a pack case 200, and a fireproof cover 300.

A plurality of battery modules 100 are provided and arranged in various ways. For example, as shown in FIG. 1, the plurality of battery modules 100 may be arranged horizontally and vertically, but are not limited thereto.

Referring to FIG. 2, the battery module 100 may include a plurality of battery cells 110 and a module case 120.

The plurality of battery cells 110 may be stacked one another. The battery cell 110 may have various structures, and the plurality of battery cells 110 may be stacked in various ways.

The battery cell 110 may be configured in a structure in which a plurality of unit cells, in which a positive electrode plate, a separator, and a negative electrode plate are arranged in sequence, or a plurality of bi-cells, in which a positive electrode plate, a separator, a negative electrode plate, a separator, a positive electrode plate, a separator, and a negative electrode plate are arranged in sequence, is stacked according to the battery capacity.

The battery cell 110 may have an electrode lead. The electrode lead is a kind of terminal that is exposed to the outside and connected to an external device, and may be made of a conductive material. The electrode lead may include a positive electrode lead and a negative electrode lead.

The positive electrode lead and the negative electrode lead may be disposed at opposite sides with respect to the longitudinal direction of the battery cell 110, or the positive electrode lead and the negative electrode lead may be located at the same side with respect to the longitudinal direction of the battery cell 110.

The battery cell 110 may have a plurality of cartridges (not shown) that accommodate the battery cells 110. Each cartridge (not shown) may be manufactured by plastic injection molding, and a plurality of cartridges (not shown) having a storage portion capable of storing the battery cells 110 may be stacked. A cartridge assembly in which a plurality of cartridges (not shown) is stacked may have connector elements or terminal elements.

The connector elements may include, for example, various types of electrical connection components or members for connection with a BMS (Battery Management System) (not shown) capable of providing data on the voltage or temperature of the battery cell 110 or the like.

In addition, the terminal elements are main terminals connected to the battery cell 110 and include a positive electrode terminal and a negative electrode terminal. The terminal element may have a terminal bolt to be electrically connected to the outside structure. Meanwhile, the battery cell 110 may have various shapes.

Referring to FIG. 2, a plurality of battery cells 110 are stacked and accommodated in the module case 120. The module case 120 surrounds the plurality of battery cells 110 and thus protects the battery cells 110 from external vibration or shock.

The module case 120 may be formed in a shape corresponding to the shape of the stack formed by stacking a plurality of battery cells 110. For example, if the stack formed by stacking a plurality of battery cells 110 has a hexahedral shape, the module case 120 may also be formed in a hexahedral shape to correspond thereto. However, the present disclosure is not limited thereto. Here, the module case 120 may include an upper module case, a lower module case, and a side module case.

In addition, the module case 120 may be manufactured, for example, by bending a metal plate, and as a result, the module case 120 may be manufactured as an integrated piece. If the module case 120 is manufactured as an integrated piece, the coupling process may be simplified and easy. Alternatively, the module case 120 may be configured as a separate type and coupled by welding or the like. However, the material of the module case 120 is not limited to metal.

Referring to FIG. 1, a plurality of battery modules 100 are accommodated in a pack case 200. The pack case 200 may include, for example, a lower frame 210, a side frame 220, an inner frame 230, a barrier frame 240, and an upper frame 250.

The lower frame 210 is configured so that the plurality of battery modules 100 are seated thereon. The lower frame 210 may be formed in a square plate shape, but is not limited thereto. The lower frame 210 forms the bottom of the pack case 200.

The side frame 220 may be configured to extend upward from the edge of the lower frame 210. The side frame 220 defines the height of the pack case 200 and forms a preset space between the side frame 220 and the lower frame 210. Also, a plurality of battery module 100 are seated in the space between the side frame 220 and the lower frame 210. The side frame 220 may include a long side frame 220a, which is relatively long, and a short side frame 220b, which is relatively short.

The inner frame 230 extends upward from the inside of the lower frame 210 and is coupled to the side frame 220. One or more inner frames 230 may be provided, and a plurality of battery modules 100 may be arranged to face each other based on the inner frame 230. The inner frame 230 is arranged in the same direction as the short side frame 220b.

The barrier frame 240 is coupled to the inner frame 230. Here, the barrier frame 240 is arranged in the same direction as the long side frame 220a. Also, the barrier frame 240 is interposed between the plurality of battery modules 100. In FIG. 1, one barrier frame 240 is disposed between two neighboring battery modules 100, but the present invention is not limited thereto.

The upper frame 250 is coupled to the side frame 220. The upper frame 250 may have a rectangular plate shape, but is not limited to.

Referring to FIGS. 3, 7, and 8, the fireproof cover 300 is configured to cover a plurality of bus bars 400 to prevent an abnormal phenomenon of the bus bar 400 when a thermal event occurs.

Referring to FIGS. 1 and 3, the fireproof cover 300 may be configured to be coupled to the inner frame 230 and to be put on the barrier frame 240. For example, as in FIG. 4, a groove 340 may be formed on the fireproof cover 300.

Also, as in FIG. 6, a protrusion 241 may be formed on the barrier frame 240. Also, as in FIG. 3, the protrusion 241 of the barrier frame 240 may be fitted into and put on the groove 340 of the fireproof cover 300.

With this configuration, the fireproof cover 300 may be installed on the barrier frame 240 without fastening members, which allows easy assembly and reduces costs by eliminating fastening members.

Also, the fireproof cover 300 may cover the plurality of battery modules 100. For example, referring to FIGS. 1 and 3, four battery modules 100 may be arranged so that the bus bars 400 respectively provided in the battery modules 100 are located adjacent to each other. That is, based on the inner frame 230, two battery modules 100 may be disposed at the left side of the inner frame 230 (based on FIG. 3), and based on the inner frame 230, the remaining two battery modules 100 may be disposed at the right side of the inner frame 230 (based on FIG. 3).

Here, the bus bar 400 connecting the two battery modules 100 is located adjacent to the inner frame 230. That is, the two battery modules 100 at the left side of the inner frame 230 and the two battery modules 100 at the right side of the inner frame 230 may be located to face each other.

If the two battery modules 100 at the left side of the inner frame 230 and the two battery modules 100 at the right side of the inner frame 230 are arranged to face each other in this way, the first bus bar 400a connecting the two battery modules 100 at the left side of the inner frame 230 and the second bus bar 400b connecting the two battery modules 100 at the right side of the inner frame 230 may be located adjacent to the inner frame 230, as shown in FIG. 8.

In addition, as shown in FIGS. 3 and 8, when the first bus bar 400a and the second bus bar 400b are located adjacent to the inner frame 230, one fireproof cover 300 may cover both bus bars 400a, 400b. That is, one fireproof cover 300 may be configured to cover all of four battery modules 100.

The overall manufacturing cost may be reduced by this structure. That is, since the battery pack 10 according to the first embodiment of the present disclosure requires only one fireproof cover 300 to cover all of four battery modules 100, the quantity of fireproof covers 300 is reduced, and thus the cost is also reduced.

Referring to FIGS. 4 and 8, the fireproof cover 300 may be configured to include a first cover portion 310, a second cover portion 320, and a connection portion 330.

The first cover portion 310 covers the first bus bar 400a that connects a plurality of battery modules 100 arranged at one side (the left side in FIGS. 4 and 8) of the inner frame 230 based on the inner frame 230. That is, the first cover portion 310 is configured to cover the first bus bar 400a at the upper side of the first bus bar 400a.

As described above, when a thermal event occurs in the battery cell 110, the bus bar 400 may be distorted by heat, causing a short circuit or destruction of insulation.

If an abnormal phenomenon such as a short circuit of the bus bar 400 occurs, the battery module 100 or the battery pack 10 is damaged, so it is necessary to prevent the abnormal phenomenon of the bus bar 400.

Since the first cover portion 310 is configured to cover the first bus bar 400a at the upper side of the first bus bar 400a, the first cover portion 310 protects the first bus bar 400a even if a thermal event occurs in the battery cell 110, thereby preventing an abnormal phenomenon caused by the first bus bar 400a.

The second cover portion 320 covers the second bus bar 400b that connects a plurality of battery modules 100 arranged at the other side (the right side in FIGS. 4 and 8) of the inner frame 230 based on the inner frame 230. That is, the second cover portion 320 is configured to cover the second bus bar 400b at the upper side of the second bus bar 400b.

In addition, just as the first cover portion 310 protects the first bus bar 400a from a thermal event of the battery cell 110, the second cover portion 320 may protect the second bus bar 400b from a thermal event of the battery cell 110, thereby preventing an abnormal phenomenon caused by the second bus bar 400b.

The connection portion 330 is configured to connect the first cover portion 310 and the second cover portion 320. The connection portion 330 may be formed integrally with the first cover portion 310 and the second cover portion 320, or may be manufactured separately and then connected in various ways.

The connection portion 330 may be coupled to the inner frame 230. The connection portion 330 may coupled to the inner frame 230 in various ways. For example, as in FIG. 6, at least one coupling groove 231 is formed in the inner frame 230, and as in FIG. 3, the connection portion 330 (see FIG. 4) may be coupled to the coupling groove 231.

Here, the coupling groove 231 may be formed in a slit shape on the upper and side surfaces of the inner frame 230. Of course, the shape of the coupling groove 231 is not limited thereto. In addition, in order to ensure that the connection portion 330 is more stably coupled to the inner frame 230, the coupling grooves 231 may be formed in a pair. In addition, the pair of coupling grooves 231 may be formed parallel to each other. However, it is also possible that only one coupling groove 231 is formed or three or more coupling grooves 231 are formed, and also, the coupling grooves 231 do not necessarily have to be parallel.

Referring to FIGS. 3 and 8, the first cover portion 310 and the second cover portion 320 may be formed symmetrical to each other based on the connection portion 330, but are not limited thereto. In addition, referring to FIG. 8, the first cover portion 310 may be provided to cover the first bus bar 400a at the upper side of the first bus bar 400a, and the second cover portion 320 may be provided to cover the second bus bar 400b at the upper side of the second bus bar 400b.

Meanwhile, referring to FIGS. 3 and 4, the fireproof cover 300 may be formed in a shape including an H shape, but the shape of the fireproof cover 300 is not limited thereto.

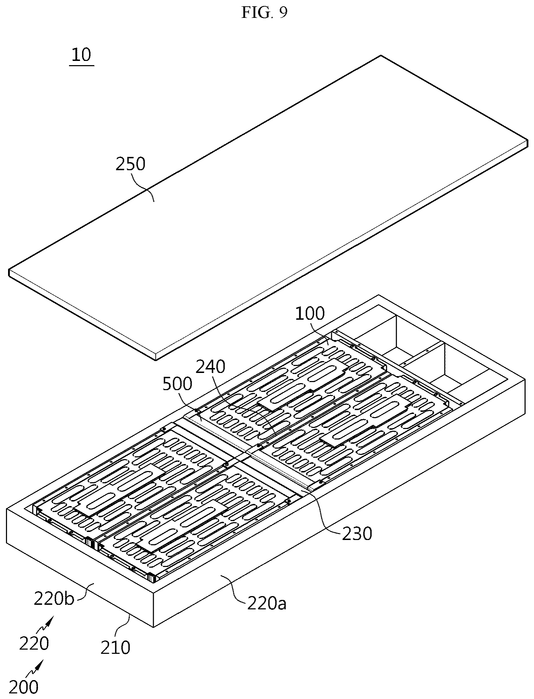

FIG. 9 is a partially exploded perspective view showing a battery pack according to the second embodiment of the present disclosure.

The second embodiment of the present disclosure is structurally different from the first embodiment in that it includes a blocking cover. In addition, any contents common to the descriptions in the first embodiment are replaced with the description of the first embodiment. In addition, any descriptions in the second embodiment that are applicable to the first embodiment may be applied to the first embodiment.

Referring to FIG. 9, the blocking cover 500 may be installed at the upper side of the fireproof cover 300. In FIG. 9, the fireproof cover 300 is not shown because it is covered by the blocking cover 500, but the fireproof cover 300 of the second embodiment is common with the fireproof cover 300 of the first embodiment.

The blocking cover 500 is configured to withstand a higher temperature than the fireproof cover 300 in order to prevent the fireproof cover 300 from melting due to high temperature, and is provided to cover the fireproof cover 300. Here, like the fireproof cover 300, the blocking cover 500 may be installed on the barrier frame 240 without fastening members.

The blocking cover 500 may be made of various materials, and for example, it may be made of mica, which is a fire-resistant material, but the material of the blocking cover 500 is not limited thereto.

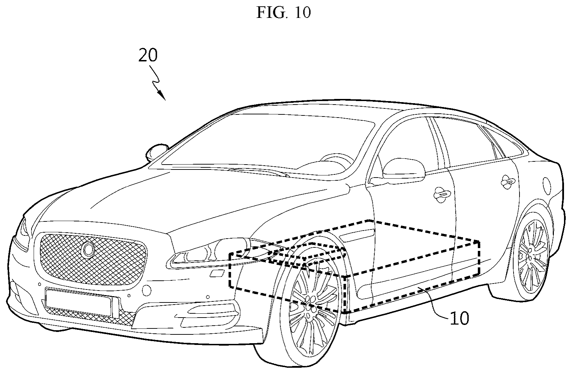

FIG. 10 is a drawing for illustrating a vehicle including the battery pack according to each embodiment of the present disclosure.

Referring to FIG. 10, the vehicle 20 according to one embodiment of the present disclosure may include one or more battery packs 10 according to each of the above-described embodiments. Here, the vehicle 20 includes various vehicles designed to use electricity, such as electric vehicles or hybrid electric vehicles.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery pack and a vehicle including them, and particularly, is available to industries related to secondary batteries.

## Claims

1. A battery pack, comprising:
a plurality of battery modules in each of which a plurality of battery cells are stacked;
a pack case in which the plurality of battery modules are accommodated; and
a fireproof cover configured to cover a plurality of bus bars, which electrically connect the plurality of battery modules, to prevent an abnormal phenomenon of the bus bars when a thermal event occurs.

2. The battery pack according to claim 1,
wherein the pack case includes:
a lower frame on which the plurality of battery modules are seated;
a side frame extending upward from an edge of the lower frame;
an inner frame extending upward from an inside of the lower frame and coupled to the side frame;
a barrier frame coupled to the inner frame and interposed between the plurality of battery modules; and
an upper frame coupled to the side frame,
wherein the fireproof cover is attached to the inner frame and is put on the barrier frame.

3. The battery pack according to claim 2,
wherein the fireproof cover includes:
a first cover portion configured to cover a first bus bar that connects a plurality of battery modules arranged at one side of the inner frame based on the inner frame;
a second cover portion configured to cover a second bus bar that connects a plurality of battery modules arranged at the other side of the inner frame based on the inner frame; and
a connection portion configured to connect the first cover portion and the second cover portion.

4. The battery pack according to claim 3,
wherein the inner frame has at least one coupling groove formed thereon, and the connection portion is coupled to the coupling groove.

5. The battery pack according to claim 4,
wherein the coupling groove is formed in a slit shape on upper and side surfaces of the inner frame.

6. The battery pack according to claim 4,
wherein the coupling groove is formed in a pair, and the pair of coupling grooves are formed parallel to each other.

7. The battery pack according to claim 3,
wherein the first cover portion and the second cover portion are symmetrical to each other based on the connection portion.

8. The battery pack according to claim 3,
wherein the first cover portion is provided to cover the first bus bar at an upper side of the first bus bar, and the second cover portion is provided to cover the second bus bar from at an upper side of the second bus bar.

9. The battery pack according to claim 1,
wherein one fireproof cover is configured to cover four battery modules.

10. The battery pack according to claim 9,
wherein the four battery modules are arranged so that the bus bars respectively provided in the battery modules are located adjacent to each other.

11. The battery pack according to claim 2,
wherein the barrier frame has a protrusion formed thereon,
wherein the fireproof cover has a groove formed thereon, and
wherein the protrusion of the barrier frame is fitted into the groove of the fireproof cover.

12. The battery pack according to claim 1,
wherein the fireproof cover is formed in a shape including an H shape.

13. The battery pack according to claim 1, further comprising:
a blocking cover installed at an upper side of the fireproof cover.

14. The battery pack according to claim 13,
wherein the blocking cover is made of mica.

15. A vehicle, comprising the battery pack according to any one of claims 1 to 14.
